# EUROPEAN PATENT APPLICATION

(11) **EP 1 782 877 A2**
(43) Date of publication of application: **09.05.2007**
(21) Application number: 06022013.4
(22) Date of filing: 20.10.2006
(51) Int. Cl.: B01D 35/28, B01D 39/04

(54) **Filter screen**

(30) Priority: 21.10.2005 JP 2005334920
(71) Applicant: Morimura Kousan Kabushiki Kaisha, Minoo-shi, Osaka (JP)
(72) Inventor: Morimura, Tadaki, Minoo-shi Oosaka (JP)
(74) Representative: Pautex Schneider, Nicole Véronique

(57) **Abstract**

There is provided a fibrous filter screen formed by stretching, aligning in parallel and laminating a number of liquid crystal-spun poly-*p* phenylenebenzoxazole fibers.

## Description

### BACKGROUND OF THE INVENTION

### Field of the Invention

This invention relates to a novel filter screen.

### Prior Art

Filtration techniques are widely applied to various fields by many kinds of forms and manners using a variety of filtration systems.

Membrane types are basically used for the purpose of filtering although filtration is carried out in varied manners and includes different types of flat membrane, hollow thread, tubular and others.

Such a filter membrane is made of organic and inorganic materials.

In spite of a type or material of filter, the structure of filter membranes is substantially common and comprises a number of fine pores which capture fine particles contained in liquids to be filtered.

In a process of filtration by means of fine pores, more sparse porosity lowers tensile strength of the filter medium, especially that of the filter membrane to cause damage thereof, while more dense porosity decreases filtration performance, although the membrane is seldom damaged because of tensile strength sufficient to conduct filtration, and would cause difficulties in, for example, regenerating the screen by back-flash washing and other treatments when such pores are fouled by fine solid particles left on the filter.

A fouled situation as described above tends to increase bacteria on the filter, which further develops fouling. In order to remove such the bacterial fouling, chemical sterilization of the screen is necessary and is very costly.

An average durability of conventional filter membranes is as short as about three years, and thus the membranes should be displaced with new ones to use the filtration system continuously. The cost of each displacement amounts to several ten percent of that of a filtration system itself, which is a typical reason to insufficiently spread the system.

As the conventional filter membranes are made of a variety of materials, it is very difficult to provide uniform porosity due to various methods of pore-formation and properties of each material. As a result, a pore size as average pore diameters of conventional filter membranes considerably varies widely. Although the average pore size of commercially available filter membranes is indicated in general, a difference in pore diameters is very remarkable and, for example, the thus indicated nominal diameter of 1µ includes in the range of about 0.1 to 5µ as a rule and is no more than a large majority of the diameter.

It is hardly expected to conduct filtration precisely and effectively using a filtration system with a conventional filter membrane of widely varied pore diameters and, for this reason, uniformity of pore diameters is quite important. There has been provided no satisfactory filtration system on which fine pores are formed effectively.

In order to deal with problems as described above, the inventor developed a filter screen, without using a filter membrane of fine pore type, in which exceedingly fine fibers are aligned in parallel with stretching and laminated, thereby particles being filtered off by each slit-like gap formed between adjacent fibers. This invention has been applied and already patented (see, Japanese Patent Nos. 3160660 and 3686918; US Patent No. 5,942,113; German Patent No. 19,745,381; British Patent No. 2,390,039; etc.).

Fibers used in the above mentioned invention are fine and uniform and have high tensile strength and outstanding properties. As these fibers are not extended by filtration pressure and provide a number of dense and parallel gaps between fibers as a stable and uniform screen, the filter screen made therefrom is far more superior to conventional pored filter membranes.

Further, this filter screen can be repeatedly used by back-flash washing to avoid fouling caused by fine particles deposited thereon and is thus much more useful than conventional filters from a standpoint of regeneration. However, a change in properties of these fibers is occurred by water absorption and, as a matter of fact, causes complicated problems including less capabilities as a filter when they are practically used as a filter material for a long time, even though their properties such as strength and fineness enough to keep the strength to a certain level are satisfactory as normal requirements. For lack of sufficient materials to meet requirements as the filter screen, there has been forced to use conventional ones. The filter screen made of such materials does not provide filtering capabilities and accuracy equal to conventional pored membranes.

The inventor has further investigated a number of fibers useful as the filter screen and finally found that properties of a poly-*p*-phenylenebenzoxazole fiber and fibers of similar synthetic resin are useful for the filter screen of slit type, which is different from conventional pore filtration types using porous flat-, hollow thread-, tubular-membranes and etc. It is quite unique that these fibers are used not for their intrinsic purpose such as fibrous products or industrial materials but for the filter screen. The filter screen of the present invention is comparable with conventional membranes of pore filtration type or more effective rather than them.

### Means to solve the Problems.

### SUMMARY OF THE INVENTION

According to the invention, there is provided a fibrous filter screen made up by stretching, aligning in parallel and laminating a number of liquid crystal-spun fibers of poly-*p*-phenylenebenzoxazole.

Preferably, the thus spun fiber is 0.005 mm in diameter and the filter screen is 0.03 to 0.5 mm in thickness.

A frame body to be fixed with the filter screen is not limited to a specific form and may be a solid such as a column or cube.

### BRIEF DESCRIPTION OF THE DRAWINGS

Fig. 1 is a perspective view of a filtration system used a filter screen of this invention.
Fig. 2 is a perspective view of a frame body for the filtration system shown in Fig. 1.
Fig. 3 shows determinations of filtrates.
Fig. 4 is a perspective view of another filtration system used a filter screen of this invention.

### DETAILED DESCRIPTION AND PREFERRED EMBODIMENTS

The filter screen of the invention is prepared by aligning in parallel and laminating very fine fibers of liquid crystal-spun poly-*p*-phenylenebenzoxazole, thereby filtration being conducted through gaps formed between each of the fibers. Tensile strength of the present filter screen is remarkably higher than conventional fibers as a material for filtration, for example, *ca.* 18 times of steel, *ca.* 4.5 times of polyester and *ca.* 2 times of aramid and carbon fiber, while creep characteristics thereof are considerably outstanding: creep parameter of half or less compared with aramid, very long creep breaking life time, etc.; and other improved properties such as the fiber surface is uniform or well-balanced. Because of the above mentioned improved properties, the present filter screen is fully comparable with various membranes used by conventional filtration systems and, at the same time, makes it possible to easily remove particles deposited on the screen by back-flash washing when fouling is occurred. In other words, the screen can be regenerated without difficulties and used repeatedly for a long time. Fouling caused by particle deposition has been hardly solved by conventional filtration systems.

Further, bacterial fouling as a conventional problem is also solved almost completely by the present invention.

According to conventional filtration systems by means of fine pores, liquid to be filtered should be pressurized from outside or inside, however, no specific pressure is necessary in the present invention in which a pressure enough to conduct filtration is added by liquid depending on its depth.

It is a matter of course that preparation of the filter screen is quite easy.

### Example 1

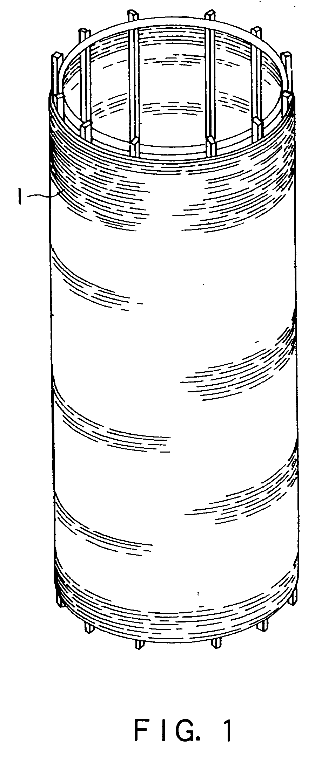

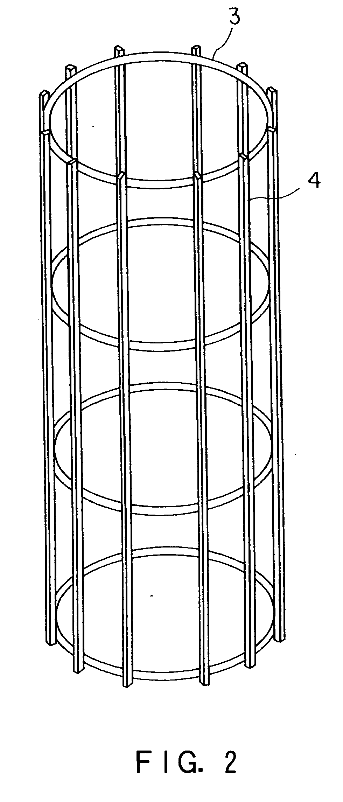

Fig. 1 is a perspective view of a filter screen 1 of the invention fixed on a frame body 2 shown in Fig. 2. The frame 2 is consisted of circular lateral frames 3 and linear longitudinal frames 4. More precisely, plural lateral frames 3 are arranged in parallel at constant intervals, while plural longitudinal frames 4 are vertically arranged on the surface of the frames 3 in the circular direction to form a solid structure by connecting intersections of each of the frames 3 and 4. The frame body 2 is about 15 cm in diameter and about 45 cm in height. The lateral and longitudinal frames 3 and 4 are made of plastics but may be of metallic materials if they are stiff to some extent and resistant to filtering circumstances to a required level.

The filter screen 1 as shown in Fig.1 was made up into by repeatedly coiling up liquid crystal-spun poly-*p*-phenylenebenzoxazole fibers of nearly circular cross section and 0.012 mm in diameter to form a thoroughly uniform layer of about 0.4 mm in thickness.

A test tank of 2 m in height and 40 cm in inner diameter was filled with an aqueous solution containing 100 mg/l of bentonite and put therein the filter screen for one minute at a depth of 1.5 m followed by collecting water in the screen to determine size and a quantity of particles in the filtrate by means of a turbidimeter and a particle size analyzer.

### Comparative Example 1

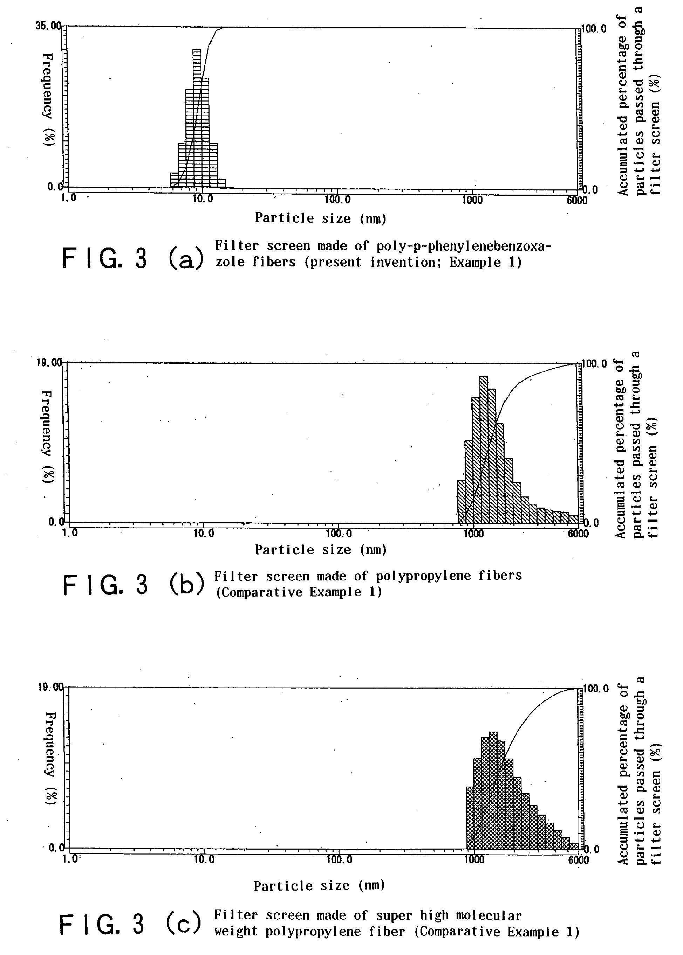

A filter screen was formed in a similar manner as described in Example 1 except polypropylene and super high-molecular weight polypropylene fibers of similar characteristics were used instead of poly-*p*-phenylenebenzoxazole and was subjected to determination similarly as Example 1. Results of both examples are shown in Fig. 3, which demonstrates that filtration capabilities of the filter screen made of the present poly-*p*-phenylene-benzoxazole fibers are apparently excellent.

### Example 2

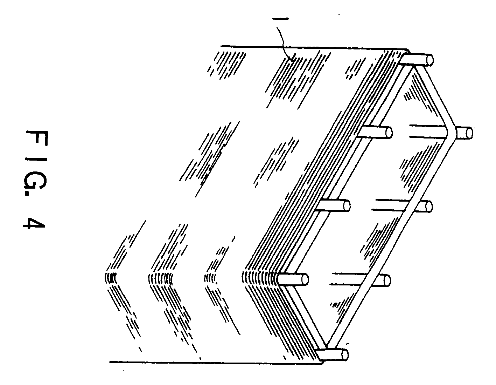

A filter screen shown in Fig. 4 is basically same as that of shown in Fig. 1 except the frame body is different in shape. The filter screen of rectangular pillar type has about the same size and dimensions and showed similar test result.

### Comparative Example 2

A polyhedral filter screen was made up by repeatedly coiling up stressed 189,000 aramid fibers (commercially available from Teijin Techno Products Co., Ltd) of 145 mm in diameter, 142 mm in average polygonal outer diameter, 12 mm in filtration width and about 53m² in filtration area on a frame body and tested in a similar manner as described in Example 1. The test was repeated three times and showed the following result with regard to each volume of water and turbidity in the filtrates.

**Table 1**

| No. of tests | Volume of water (ml) | Turbidity (ppm) |
|---|---|---|
| 1 | 1,400 | 30 |
| 2 | 1,500 | 36 |
| 3 | 1,400 | 35 |

| | | |
|---|---|---|
| (Initial turbidity of water to be filtered was 33 ppm) | | |

It is clear from Table 1 that aramid fibers are not useful for a material of the present filter screen because of poor filtration capabilities. Increases in turbidity over the initial level at second and third times are exclusively caused by residual particles in the filtrates.

## Claims

1. A fibrous filter screen formed by stretching, aligning in parallel and laminating a number of liquid crystal-spun poly-*p*-phenylene-benzoxazole fibers.

2. A fibrous filter screen claimed in claim 1 in which the poly-p-phenylene- benzoxazole fibers are 0.005 to 0.015 mm in diameter and the filter screen is 0.03 to 0.5 mm in thickness.
